# EUROPEAN PATENT APPLICATION

(11) **EP 4 810 172 A1**
(43) Date of publication of application: **23.09.2026**
(21) Application number: 25165125.3
(22) Date of filing: 20.03.2025
(51) Int. Cl.: B08B 7/00, B08B 15/00

(54) **A METHOD AND FACILITY FOR THERMAL CLEANING OF METAL PARTS**

(71) Applicant: Fornax A/S, 8600 Silkeborg (DK)
(72) Inventor: Thoustrup, Asbjørn, 2980 Kokkedal (DK); Overgaard, Jens, 8920 Randers NV (DK)
(74) Representative: Patrade A/S

(57) **Abstract**

A facility (50) and a method for thermal cleaning and separation of metal parts (12), preferably windings from a stator of an electric motor and/or generator, where the stator windings are embedded in an organic and insulating material, where the stator is placed and heated under controlled conditions in a heating chamber (6) comprising a gas mixture of more than 86 vol% inert gas and less than 14 vol% oxygen, such that the organic covalent bonds of the organic material will undergo pyrolysis, resulting in the production of a char product and volatile organic products that will evaporate into the gas mixture in the heating chamber (6). The flue gas in the heating chamber (6) comprising a mixture of oxygen, volatile organic products and inert gas is then subjected to an oxidation process by addition of a oxygen enriched gas mixture, resulting in the oxidation of the volatile organic products into CO2 and O2.

## Description

### Field of the Invention

The present invention relates to a machine and a method for thermal cleaning and separation of metal parts, preferably separating windings from a stator of an electric motor and/or generator, where the stator windings are embedded in an organic and insulating material, where the stator is placed and heated under controlled conditions in a heating chamber, where the organic material is evaporated, whereby the windings are loosened and where the volatile organic products are oxidised.

### Background of the Invention

In connection with repair and renovation of electric motors, the stator is often to be re-wound. A stator is wound with windings, normally copper windings, which are embedded in grooves in the stator housing by means of an insulating organic material, typically resin or varnish (Harz in German). This material is applied in fluid form and is set by means of heat.

Prior to rewinding, these windings are to be removed, which may be achieved by mechanical removal, or by heating with a manual gas burner (uncontrolled temperature), or by a controlled heating of the stator housing in an oven.

The latter method provides the best result, but such a facility has various drawbacks. The facilities are expensive so that small and medium repair shops cannot pay the investment in such a facility, and also there is an environmental aspect in this case.

When the stator is heated in the oven, the insulating organic material is brought to dissolve and is led away from the oven as flue gas. For environmental reasons, the flue gas is conducted to an afterburner that provides so strong heating of the flue gaskin in the presence of oxygen that the organic elements are more or less completely burned off (i.e. converted mainly into carbon dioxide and water), after which the flue gas is led to the free surroundings.

Such a plant is not very economical since, as described above, it is necessary with an afterburner requiring some energy for cleaning the flue gas from organic substances.

EP1513626 B1 discloses a machine and a method for thermal cleaning and separation of metal parts, such as a stator from an electric motor, where the stator windings are embedded in an organic and insulating material, where the stator is placed and heated to 250-500°C under controlled conditions in a heating chamber, resulting in the evaporation of the organic material and loosening of the windings. The gas from the heating chamber comprising the evaporated organic substances is then lead through a closed pipe system for condensing the organic gases and separate them from the other gasses from the oven that are then reused in the heating chamber. However, as the waste material, that is the condensed organic material, is a sticky dark matter that is hard to dispose of and is prone to clog the system and is hard to remove from the treated subject.

There is thus a need for a method that can separate the insulating organic material from a subject, such as a stator, in an easy, economical manner without the production of a waste material that causes new obstacles or problems, such as clogging the facility or requiring additional cleaning treatment of the subject after treatment, thus complicating the process and causing additional cost. There is a further need for a facility or an apparatus that is capable of performing the separation of organic material from a subject, such as a stator without production of a waste material that in itself causes the new obstacles or problems within the facility, such as clogging pipes and valves and interfering in the effectiveness of the treatment, thus complicating the process and causing additional cost.

Moreover, there is a need for a more energy efficient method for thermal cleaning and separation of metal parts, preferably separating windings from a stator of an electric motor and/or generator wherein the amount of any gas utilized in the method is minimized, and thus the amount of energy for heating up said gas is limited, where the gas utilized can be atmospheric air and/or oxygen and/or inert gas and/or any suitable gas. There is further a need for a more energy efficient facility or apparatus that is capable of performing the thermal cleaning and separation of metal parts, preferably separating windings from a stator of an electric motor and/or generator wherein the amount of gas utilized and thus the amount of energy for heating up the gas utilized is limited.

### Object of the Invention

It is thus the objective of the present invention to provide a method for thermal cleaning and separation of metal parts, preferably separating windings from a stator of an electric motor and/or generator in an easy economical manner without the production of a waste material that causes new obstacles or problems.

It is a further objective of the present invention to provide a more energy efficient method for thermal cleaning and separation of metal parts, preferably separating windings from a stator of an electric motor and/or generator wherein the amount of gas utilized and thus the amount of energy for heating up the gas utilized is limited.

It is yet another objective of the present invention to provide a facility that is capable of performing the separation of organic material from a subject, such as a stator without production of a waste material that in itself causes new obstacles or problems within said facility.

Another objective of the present invention is to provide a more energy efficient facility or apparatus that is capable of performing the thermal cleaning and separation of metal parts, preferably separating windings from a stator of an electric motor and/or generator wherein the amount of gas utilized and thus the amount of energy for heating up the gas utilized is limited.

### Description of the Invention

One objective of the present invention is achieved by a method for thermal cleaning and separation of metal parts, preferably separating windings from a stator of an electric motor and/or generator, where the stator windings are embedded in an organic and insulating material, wherein the stator housing is subjected to heat for chemical decomposition of the organic material, whereby the windings are loosened, comprising the steps of:
- providing a heating chamber;
- placing the stator with or without housing in the heating chamber;
- connecting the heating chamber to a gas source capable of producing a first inert gas enriched gas stream comprising inert gas and oxygen and supplying the heating chamber with the first inert gas enriched gas stream;
- applying heat to the heating chamber in a controlled manner thereby leading to chemical decomposition of the organic material and evaporation of volatile organic products into the gas within the heating chamber, thereby creating a flue gas comprising a mixture of volatile organic products, any remaining oxygen and inert gas; and
- collecting the flue gas from the heating chamber into a second flue gas stream comprising a mixture of volatile organic products, any remaining oxygen and inert gas and leading the second flue gas stream from the heating chamber to an afterburner;
wherein first inert gas enriched gas stream comprises more than 86 vol% inert gas and less than 14 vol% oxygen and wherein the chemical decomposition is predominantly pyrolysis.

The objectives of the present invention are furthermore achieved by a facility for thermal cleaning and separation of metal parts, preferably windings from a stator of an electric motor and/or generator, where the stator windings are embedded in an organic and insulating material, wherein the stator is subjected to heat for evaporation of the organic material, whereby the windings are loosened, comprising:
- a gas source;
- a heating chamber comprising a first inlet in fluid connection with the gas source;
- an afterburner comprising a second inlet in fluid connection with the heating chamber by connection means (13) and a third inlet in fluid connection with the gas source; and
wherein the gas source provides a first inert gas enriched gas stream comprising less than 14% oxygen and more than 86 vol% inert gas that is led to the heating chamber and a third oxygen enriched gas stream comprising at least 25% vol% oxygen that is led to the afterburner.

### Detailed Description of the Invention

Examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidly connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

One embodiment of the present invention provides a method of thermal cleaning and separation of metal parts, preferably separating windings from a stator of an electric motor and/or generator, where the stator windings are embedded in an organic and insulating material, wherein the stator is subjected to heat for evaporation of the organic material, whereby the windings are loosened, comprising the steps of:
- providing a heating chamber;
- placing the stator with or without housing in a heating chamber;
- connecting the heating chamber to a gas source capable of producing a first inert gas enriched gas stream comprising inert gas and oxygen and supplying the heating chamber with the first inert gas enriched gas stream comprising inert gas and oxygen;
- applying heat to the heating chamber in a controlled manner, preferably according to a curve of controlled temperature and time; thereby leading to evaporation of volatile organic products of the organic material into the mixture of inert gas and oxygen, thereby creating a flue gas; and
- collecting the mixture of inert gas, any remaining oxygen and volatile organic products into a second flue gas stream and leading the second flue gas stream from the heating chamber to an afterburner;
wherein the first inert gas enriched gas stream comprises more than 86 vol% inert gas and less than 14 vol% oxygen.

One embodiment of the present invention provides a facility for thermal cleaning and separation of metal parts, preferably windings from a stator of an electric motor and/or generator, where the stator windings are embedded in an organic and insulating material, wherein the stator is subjected to heat for evaporation of the organic material, whereby the windings are loosened, comprising:
- a gas source;
- a heating chamber comprising a first inlet in fluid connection with the gas source;
- an afterburner comprising a second inlet in fluid connection with the heating chamber and a third inlet in fluid connection with the gas source;
wherein the gas source provides a first inert gas enriched gas stream comprising less than 14% oxygen and more than 86 vol% inert gas and a third oxygen enriched gas stream, and wherein said first inert gas enriched gas stream is led from the gas source to the heating chamber and said third oxygen enriched gas stream is led from the gas source to the afterburner.

It should be noted that in the second flue gas stream the concentration of oxygen will depend on the ongoing chemical decomposition of the organic products within the heating chamber. Initially, the heating chamber will be supplied with the first inert gas enriched gas stream comprising inert gas enriched gas mixture comprising more than 86 vol% inert gas and less than 14 vol% oxygen, however during the process, any combustion of the organic products within the heating chamber will utilize the oxygen, as the oxygen supply or the amount of oxygen in the first inert gas enriched gas stream flowing to the heating chamber is not high enough for sustaining a combustion process, thus resulting in a drop in the oxygen concentration in the heating chamber, and that the chemical decomposition becoming pyrolysis, and consequently in a drop in the oxygen concentration in the flue gas collected to the second flue gas stream.

The chemical reaction taking place during the ongoing chemical decomposition of the organic products within the heating chamber will depend on the concentration of oxygen in the heating chamber. Initially, the heating chamber will be supplied with the first inert gas enriched gas stream comprising inert gas enriched gas mixture comprising more than 86 vol% inert gas and less than 14 vol% oxygen, however, during the process, any combustion of the organic products within the heating chamber will utilize the oxygen, as the oxygen supply or the amount of oxygen in the first inert gas enriched gas stream flowing to the heating chamber is not enough for sustaining a combustion process, thus resulting in a drop in the oxygen concentration in the heating chamber, and thus resulting in pyrolysis in the absence or near absence of oxygen.

One embodiment of the present invention provides a facility for thermal cleaning and separation of metal parts, comprising a gas source suitable for supplying a first gas stream comprising an inert gas enriched gas mixture wherein said first inert gas enriched gas stream comprises more than 86 vol% inert gas and less than 14 vol% oxygen. Another embodiment of the present invention provides a facility for thermal cleaning and separation of metal parts, comprising a gas source suitable for supplying a third oxygen enriched gas stream comprising more than 25 vol% oxygen. Yet another embodiment of the present invention provides a facility for thermal cleaning and separation of metal parts, comprising a gas source suitable for supplying a first inert gas enriched gas stream comprising more than 86 vol% inert gas and less than 14 vol% oxygen and a third oxygen enriched gas stream comprising more than 25 vol% oxygen.

One embodiment of the present invention provides a facility for thermal cleaning and separation of metal parts of a subject, such as windings from a stator of an electric motor and/or generator, comprising a heating chamber suitable for receiving and heating the subject. Another embodiment of the present invention provides a facility for thermal cleaning and separation of metal parts of a subject, such as windings from a stator of an electric motor and/or generator, comprising a heating chamber comprising a first inlet, said first inlet in fluid connection with the gas source for receiving the first inert gas enriched gas stream from the gas source.

Yet another embodiment of the present invention provides a facility for thermal cleaning and separation of metal parts of a subject, such as windings from a stator of an electric motor and/or generator, comprising a heating chamber suitable for receiving and heating a subject and first inert gas enriched gas stream received through the first inlet, thereby promoting a chemical decomposition where the predominant chemical reaction is pyrolysis of the covalent bonds of the organic material of the subject and thereby producing volatile organic products that evaporate into the gas mixture within the heating chamber, thereby producing a flue gas comprising inert gas, any remaining oxygen and said volatile organic products.

One embodiment of the present invention provides a facility for thermal cleaning and separation of metal parts of a subject, such as windings from a stator of an electric motor and/or generator, comprising an afterburner comprising a third inlet in fluid connection with the gas source for receiving the third oxygen enriched gas stream from the gas source. Another embodiment of the present invention provides a facility for thermal cleaning and separation of metal parts of a subject, such as windings from a stator of an electric motor and/or generator, comprising an afterburner in fluid connection with the heating chamber for receiving a second gas stream comprising inert gas, any remaining oxygen and said volatile organic products from the heating chamber. Yet another embodiment of the present invention provides a facility for thermal cleaning and separation of metal parts of a subject, such as windings from a stator of an electric motor and/or generator, comprising an afterburner comprising a third inlet in fluid connection with the gas source for receiving the third oxygen enriched gas stream from the gas source, said afterburner in fluid connection with the heating chamber for receiving a second flue gas stream comprising inert gas, any remaining oxygen and said volatile organic products from the heating chamber, thereby mixing the second flue gas stream and the third oxygen enriched gas stream, utilizing the oxygen provided by the third oxygen enriched gas stream for promoting an oxidation of the volatile organic products from the second flue gas stream.

One embodiment of the present invention provides a facility for thermal cleaning and separation of metal parts of a subject, such as windings from a stator of an electric motor and/or generator, comprising a connection means for fluidly connecting the afterburner to the heating chamber. Another embodiment of the present invention provides a facility for thermal cleaning and separation of metal parts of a subject, such as windings from a stator of an electric motor and/or generator, comprising a connection means for fluidly connecting the afterburner to the heating chamber and for collecting flue gas comprising inert gas, any remaining oxygen and volatile organic products into a second gas stream comprising inert gas, any remaining oxygen and said volatile organic products.

The present invention provides a method for thermal cleaning and separation of metal parts of a subject such as windings from a stator of an electric motor and/or generator, the method utilizing different means:
- a gas source suitable for providing a first inert gas enriched gas stream comprising less than 14% oxygen and more than 86 vol% inert gas and for providing a third oxygen enriched gas stream comprising more than 25 vol% oxygen;
- a heating chamber suitable for receiving the subject and suitable for receiving and containing the first inert gas enriched gas stream from the gas source, said heating chamber further suitable for heating both subject and the inert gas enriched gas provided by the first inert gas enriched gas stream, thereby promoting a chemical decomposition where the predominant chemical reaction is pyrolysis of the covalent bonds of the organic material of the subject and thereby producing volatile organic products that evaporate into the gas mixture within the heating chamber, thereby producing a flue gas comprising said volatile organic products, inert gas and any remaining oxygen;
- means for leading the first inert gas enriched gas stream comprising inert gas enriched gas mixture from the gas source to the heating chamber;
- an afterburner suitable for maintaining a minimum temperature, said afterburner further suitable for receiving the third oxygen enriched gas stream comprising more than 25 vol% oxygen from the gas source and the second flue gas stream comprising inert gas, any remaining oxygen and said volatile organic products;
- connecting means for leading the third oxygen enriched gas stream from the gas source to the afterburner;
- collecting means for collecting flue gas from the heating chamber as a second flue gas stream comprising inert gas, any remaining oxygen and volatile organic products;
- connecting means for leading the second flue gas stream from the heating chamber to the afterburner.

In one embodiment of the present invention a method for thermal cleaning and separation of metal parts is provided wherein there are three different gas streams:
- a first inert gas enriched gas stream from the gas source to the heating chamber, said first inert gas enriched gas stream comprising more than 86 vol% inert gas and less than 14 vol% oxygen;
- a second flue gas stream from the heating chamber to the afterburner, said second flue gas stream comprising inert gas, any remaining oxygen and volatile organic products; and
- a third oxygen enriched gas stream from the gas source to the afterburner, said third gas stream comprising more than 25 vol% oxygen.

Within this disclosure the phrases "percent" and "%" are meant to mean percent by volume or vol%, calculated as percent by volume = volume of solute / volume of solution x 100%.

In one embodiment of the present invention a method for thermal cleaning and separation of metal parts is provided wherein the inert gas in the first inert gas enriched gas stream supplied by the gas source to the heating chamber is nitrogen. In another embodiment of the present invention a method for thermal cleaning and separation of metal parts is provided wherein the gas source applied comprises a membrane for separating nitrogen from atmospheric air. In one embodiment of the present invention a method for thermal cleaning and separation of metal parts is provided wherein the gas source applied comprises a membrane for separating nitrogen from compressed atmospheric air and wherein the inert gas in the first inert gas enriched gas stream produced by the gas source and led to the heating chamber is nitrogen.

In one embodiment of the present invention a method for thermal cleaning and separation of metal parts is provided wherein the gas source applied comprises a membrane for separating nitrogen from atmospheric air, wherein the first inert gas enriched gas stream produced by the gas source and led to the heating chamber comprises more than 86 vol% nitrogen and less than 14 vol% oxygen and wherein the third oxygen enriched gas stream provided by the gas source and led to the afterburner comprises more than 25 vol% oxygen, such as between 25-40 vol% oxygen.

A pyrolysis is a process of decomposition or destruction of covalent bonds within an organic material within an inert environment caused by application of heat (thermal decomposition). In general, pyrolysis of organic materials produces volatile organic products and leaves behind a carbon-rich solid residue called char. Pyrolysis requires the absence or near absence of oxygen and water, as the decomposition of the covalent bonds will result in combustion in the presence of oxygen and hydrolysis in the presence of water.

By controlling the oxygen level of the gas provided by the gas source and thereby the oxygen level of the gas within the gas stream from the gas source to the heating chamber, such that the level of oxygen never reaches 14 vol%, such that the level of oxygen provided by the gas source is less than 14 vol%, it is ensured that the chemical decomposition process within the heating chamber is predominantly pyrolysis, thus resulting in evaporation of the volatile organic products produced into the gas phase within the heating chamber.

The chemical reaction taking place during the ongoing chemical decomposition of the organic products within the heating chamber will depend on the concentration of oxygen in the heating chamber. Initially, the heating chamber will be supplied with the first inert gas enriched gas stream comprising inert gas enriched gas mixture comprising more than 86 vol% inert gas and less than 14 vol% oxygen, thereby the initial chemical decomposition of the organic covalent bonds may start as combustion utilizing the initial oxygen, however, during the process, the oxygen provided by the first inert gas enriched gas stream is not enough for sustaining a combustion process, thus resulting in a drop in the oxygen concentration in the heating chamber and thus resulting in pyrolysis in the absence or near absence of oxygen, resulting in the chemical decomposition process taking place in the heating chamber being predominantly pyrolysis.

The term "predominantly pyrolysis" as used in this application is taken to mean that the majority of the organic covalent bonds being decomposed within the heating chamber will undergo pyrolysis.

It has been noted by the inventors that during the process of the method provided by the present invention, the level of oxygen within the heating chamber will fall drastically during the process and stay very close to 0 vol%, such as between 0-0.5 vol% or between 0-1 vol%, such as between 0-3 vol% during the majority of the processing time.

This results in a process, wherein only the initial chemical decomposition of organic covalent bonds is combustion, the remainder of the chemical decomposition of organic covalent bonds throughout the process being pyrolysis.

In one embodiment of the present invention a method for thermal cleaning and separation of metal parts is provided that comprises the step of placing a subject to be treated, such as a stator or a stator housing in a heating chamber, wherein the heating chamber is a convection oven, which heats up the gas or air within the heating chamber and the stator or stator housing to a temperature in the range 250-500°C, preferably in the range 330-400°C, depending on the subject to be treated. The heating may be achieved by means of electric heating elements that e.g. are provided in connection with a circulating blower in the convection oven. Alternatively, the heating may occur in a heating chamber which is heated by means of infrared waves or by induction or any other suitable method for heating up gas/air. In one embodiment of the present invention the temperature of the heating chamber applied can be controlled continuously and/or pre-programmed, so as to follow a predetermined curve of heat versus temperature and wherein both the time and temperature can be altered for alignment to the amount of organic materials, the composition of the organic materials and/or the age/condition of the organic material of the subject/stator housing to be treated. In one embodiment of the present invention a method for thermal cleaning and separation of metal parts is provided wherein the temperature of the heating chamber applied can be controlled and/or pre-programmed such that the heating of the heating chamber furnace can be done according to a curve (temperature and time) that allows pyrolysis of the organic substances of the subject/stator housing over preset time for reducing the requirement for the afterburner capacity, thereby reducing energy consumption.

The heating chamber is fluidly connected to the gas source, the gas source producing a first inert gas enriched gas stream comprising more than 86% inert gas and less than 14% oxygen.

In one embodiment of the present invention a method for thermal cleaning and separation of metal parts is provided wherein the gas mixture of inert gas and oxygen supplied by the gas source to the heating chamber comprises 4-13 vol% oxygen, such as 5-12 vol% oxygen, such as 7-10 vol% oxygen, such as 8-10 vol% oxygen such as around 9 vol% oxygen, such as 2 vol% oxygen, 3 vol% oxygen, 4 vol% oxygen, 5 vol% oxygen, 6 vol% oxygen, 7 vol% oxygen, 8 vol% oxygen, 9 vol% oxygen, 10 vol% oxygen, 11 vol% oxygen, 12 vol% oxygen or 13 vol% oxygen.

In one embodiment of the present invention a method for thermal cleaning and separation of metal parts is provided wherein the first inert gas enriched gas stream produced by the gas source is provided to the heating chamber in a continuous manner with a steady flow rate and/or the same composition of the first inert gas enriched gas stream throughout the process.

In one embodiment of the present invention a method for thermal cleaning and separation of metal parts is provided wherein the flow rate of the first inert gas enriched gas stream from the gas source to the heating chamber may be a variable, the composition of the first inert gas enriched gas stream from the gas source to the heating chamber may be a variable, and wherein either one or both of those variables can be continuously controlled and/or predetermined so as to follow a predetermined curve.

In one embodiment of the present invention a method for thermal cleaning and separation of metal parts is provided wherein the gas source supplies the afterburner with a third oxygen enriched gas stream comprising more than 25 vol% oxygen.

In one embodiment of the present invention a method for thermal cleaning and separation of metal parts is provided wherein the flow rate of the third oxygen enriched gas stream from the gas source to the afterburner may be a variable, the composition of the third oxygen enriched gas stream from the gas source to the afterburner may be a variable, and wherein either one or both of those variables can be continuously controlled and/or predetermined so as to follow a predetermined curve.

In one embodiment of the present invention the third oxygen enriched gas stream comprises more than 25 vol% oxygen, such as 25-40 vol% oxygen, such as 25-35 vol% oxygen, such as 30-35 vol% oxygen, such as 30 vol% oxygen, such as 31 vol% oxygen, such as 32 vol% oxygen, such as 33 vol% oxygen, such as 34 vol% oxygen such as 35 vol% oxygen.

In one embodiment of the present invention a method for thermal cleaning and separation of metal parts is provided wherein the flow rate of the second flue gas stream comprising inert gas, any remaining oxygen and volatile organic products collected from the heating chamber and led to the afterburner may be a variable, the composition of the second flue gas stream comprising inert gas, any remaining oxygen and volatile organic products collected from the heating chamber and led to the afterburner may be a variable, and wherein either one or both of those variables can be continuously controlled and/or predetermined so as to follow a predetermined curve.

In one embodiment of the present invention a method for thermal cleaning and separation of metal parts is provided wherein the different gas streams are not continuous throughout the process, such that the heating chamber is first filled with the first inert gas enriched gas stream from the gas source, then closed and heated, a chemical decomposition where the predominant chemical reaction is pyrolysis of the organic material of the subject initiated and finished before collecting the flue gas from the heating chamber thus creating a second flue gas stream comprising inert gas, any remaining oxygen and volatile organic products and leading it to the afterburner.

In one embodiment of the present invention a method for thermal cleaning and separation of metal parts is provided wherein the flow rate of the first inert gas enriched gas stream from the gas source to the heating chamber may be a variable, the composition of the first inert gas enriched gas stream from the gas source to the heating chamber may be a variable, the flow rate of the second flue gas stream collected from the heating chamber and led to the afterburner may be a variable, the composition of the second flue gas stream collected from the heating chamber and led to the afterburner may be a variable, the flow rate of the third oxygen enriched gas stream from the gas source to the afterburner may be a variable, the composition of the third oxygen enriched gas stream from the gas source to the afterburner may be a variable, the time applied during the process may be a variable, the temperature applied within the heating chamber may be a variable, the minimum temperature applied or maintained within the afterburner may be a variable and wherein one or more of the variables are controlled and/or predetermined so as to follow a predetermined curve.

The afterburner is suitable for maintaining a minimum temperature for ensuring full oxidation of the volatile organic products into CO2 and H2O. During the process the temperature within the afterburner will rise automatically, due to the ongoing oxidation process within the afterburner, resulting in less energy needed to maintain the minimum temperature in the afterburner.

In one embodiment of the present invention, the afterburner comprises one or more heating elements, said heating elements being any heating elements suitable for heating up gas/air, such as electric heating elements, infrared waves heating elements and/or induction heating elements, the afterburner further comprising a temperature sensor, wherein the temperature sensor is communicably connected to a controller and the one or more heating element, wherein said controller is adapted so as to utilize the temperature measurement provided by the temperature sensor to control the one or more heating element, the controller programmed to control the one or more heating element such that a minimum temperature is maintained and to limit or halt the heating of the one or more heating elements when the temperature in the afterburner is at or above the minimum temperature.

By utilizing the heat provided by the oxidation of the volatile organic products from the second flue gas stream in the afterburner, the minimum heat can be maintained without active heating of the gas/air mixture in the afterburner, thus leading to a method and facility that utilizes less energy and therefore is more economical than prior art.

In one embodiment of the present invention a method for thermal cleaning and separation of metal parts is provided wherein any of the following variables can be controlled continuously and/or pre-programmed to follow a predetermined curve:
- the flow rate of the first inert gas enriched gas stream from the gas source to the heating chamber, said first inert gas enriched gas stream comprising inert gas and oxygen;
- the composition of the first inert gas enriched gas stream from the gas source to the heating chamber, said first inert gas enriched gas stream comprising inert gas and oxygen;
- the flow rate of the second flue gas stream from the heating chamber to the afterburner, said second flue gas stream comprising inert gas, volatile organic products and any remaining oxygen collected in the heating chamber;
- the composition of the second flue gas stream from the heating chamber to the afterburner, said second flue gas stream comprising inert gas, volatile organic products and any remaining oxygen collected from the heating chamber;
- the flow rate of the third oxygen enriched gas stream from the gas source to the afterburner, said third oxygen enriched gas stream comprising more than 25 vol% oxygen;
- the composition of the third oxygen enriched gas stream from the gas source to the afterburner, said third oxygen enriched gas stream comprising more than 25 vol% oxygen;
- the temperature applied in the heating chamber;
- the minimum temperature maintained in the afterburner; and/or
- the time utilized for the process.

In one embodiment of the present invention a method for thermal cleaning and separation of metal parts is provided wherein the gas source is in fluid connection with an afterburner and provides a third oxygen enriched gas stream to the afterburner. In another embodiment of the present invention a method for thermal cleaning and separation of metal parts is provided wherein the heating chamber is in fluid connection with the afterburner and supplies a second flue gas stream comprising inert gas, volatile organic products and any remaining oxygen from the heating chamber to the afterburner. In yet another embodiment of the present invention a method for thermal cleaning and separation of metal parts is provided wherein the afterburner receives the third oxygen enriched gas stream from the gas source and the second flue gas stream from the heating chamber, wherein the afterburner maintains a preset minimum temperature and wherein the oxygen provided by the third oxygen enriched gas stream is utilized for oxidizing the volatile organic products provided by the second flue gas stream into CO2 and H2O.

One embodiment of the present invention provides a facility for thermal cleaning and separation of metal parts of a subject, such as windings from a stator of an electric motor and/or generator, comprising an afterburner comprising a third inlet in fluid connection with the gas source for receiving the third oxygen enriched gas stream from the gas source, wherein the afterburner maintains a preset minimum temperature.

Another embodiment of the present invention provides a facility for thermal cleaning and separation of metal parts of a subject, such as windings from a stator of an electric motor and/or generator, comprising an afterburner in fluid connection with the heating chamber for receiving a second flue gas stream comprising inert gas, volatile organic products and any remaining oxygen from the heating chamber. Yet another embodiment of the present invention provides a facility for thermal cleaning and separation of metal parts of a subject, such as windings from a stator of an electric motor and/or generator, comprising an afterburner comprising a third inlet in fluid connection with the gas source for receiving a third oxygen enriched gas stream comprising more than 25 vol% oxygen from the gas source, said afterburner in fluid connection with the heating chamber for receiving a second flue gas stream comprising inert gas, volatile organic products and any remaining oxygen from the heating chamber, thereby mixing the second flue gas stream and the third oxygen enriched gas stream, for utilizing the oxygen provided by the third oxygen enriched gas stream for promoting an oxidation of the volatile organic products provided by the second flue gas stream.

One embodiment of the present invention provides a facility for thermal cleaning and separation of metal parts of a subject, such as windings from a stator of an electric motor and/or generator, comprising a connection means for fluidly connecting the afterburner to the heating chamber. Another embodiment of the present invention provides a facility for thermal cleaning and separation of metal parts of a subject, such as windings from a stator of an electric motor and/or generator, comprising a connection means for fluidly connecting the afterburner to the heating chamber and for collection means for collecting flue gas comprising inert gas, any remaining oxygen and volatile organic products into a second flue gas stream.

Furthermore, it is to be mentioned briefly that a method and the facility as described here may also be used for cleaning other items, e.g. suspension hooks from painting facilities, motor parts (removal of soot and coatings), nozzles from gluing equipment, screws and tools from plastic extrusion machines, transformers, coils, hangers for painters etc., wherein some of these parts need to be separated before being subjected to the method and/or facility provided by the present invention, some of these parts will be separated and/or cleaned when subjected to the method and/or facility provided by the present invention and some of these parts will only be cleaned when subjected to the method and/or facility provided by the present invention.

It should be noted that the present invention not only provides a method and a facility for thermal cleaning and separation of metal parts of a subject, such as windings from a stator of an electric motor and/or generator, but can also be utilized for multiple other purposes, such as Pyrolysis / Burn-off, curing, drying and thermal expansion.

One of such additional purposes is the use of the method and a facility provided by the present invention for Pyrolysis / Burn-off. As explained above, the first inert gas enriched gas stream led into the heating chamber results in a chemical decomposition of the volatile organic products provided by the second flue gas stream, wherein the predominant chemical decomposition will be pyrolysis process as the gases released in the oven chamber will consume all oxygen present in the oven chamber. Once the period of gas release is over the process will automatically continue as a burn-off process during which the carbon left on the object will be oxidized leaving only inorganic substances on the object. This facilitates very much the following production steps in motor and generator rewinding.

During the cycle, the content of oxygen, carbon monoxide and nitrogen oxides in the exhaust from the afterburner is measured continuously. These measurements may be used to adjust the flow rate of air into the afterburner, and they may be used to prove the full oxidation of the organic gases before they leave the afterburner via the chimney.

The present invention provides a method and a facility for thermal cleaning and separation of metal parts of a subject, wherein the chemical decomposition of the covalent bonds of the insulating organic material is predominantly pyrolysis, such that the only combustion happening within the heating chamber is in the first initial phase of the process,, resulting in the production of an easily removable char product that does not exhibit the same sticky, hardening and difficult physical properties as the char produced during decomposition of organic covalent bonds in the presence of either oxygen or water, thus being much easier to remove from the subject after treatment and furthermore does not create any clogging and interfering with the facility during the process. The use of inert gas enriched gas mixture in the heating chamber further produces volatile organic products that will evaporate into the gas mixture within the heating chamber, thereby producing a flue gas that does not comprise any sticky and physically difficult residues. Furthermore, the third oxygen enriched gas stream provided by the gas source is utilized for enhancing the oxidation of the volatile organic products comprised in the third oxygen enriched gas stream from the heating chamber, resulting in CO2 and H2O that can be led into the atmosphere without any further treatment.

The present invention further provides an easily controllable method and facility for thermal cleaning and separation of metal parts of a subject, wherein sensors can be placed throughout the facility for fully controlling the different processes. By utilizing a predetermined curve for applied heat, amount of oxygen and time, and by continuous measurements and adjustments, the present invention provides a method and facility for thermal cleaning and separation of metal parts of a subject that is highly economical, utilizing a far less amount of energy than prior art.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:

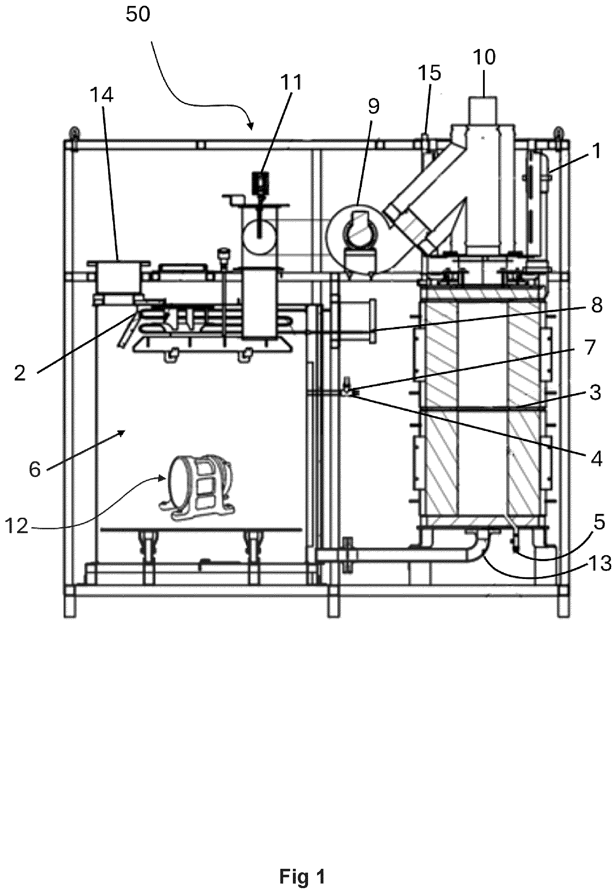

- Fig. 1: illustrates one embodiment of the dual purpose stator facility provided by the invention.

Figure 1 demonstrates an embodiment of a multifunctional facility (50) for pyrolysis/burn-off, curing, drying and thermal expansion, provided by the present invention. The multifunctional facility (50) comprises a heating chamber (6) that is heated with a heating element (8). The heating element utilized for heating up the air and/or gas within the heating chamber can be any suitable heating element, such as an electric heating element or a gas burner. The heating chamber (6) comprises a circulation fan (2) for ensuring a circulation or rotation of the hot air and/or gas within the heating chamber (6) for ensuring uniform temperature within the heating chamber and a first inlet (4) providing the heating chamber (6) with air/gas. In fig. 1 an item (12) to be treated, such as a stator is placed in the heating chamber (6), in such a way that the air and/or gas circulating in the heating chamber may freely circulate on all sides of the item (12).

The multifunctional facility (50) further comprises an afterburner (3) that is fluidly connected through connection (13) to the heating chamber (6) and a gas source (1) that is fluidly connected to both the heating chamber (6) and the afterburner (3). The gas source (1) is fluidly connected to the heating chamber (6) through connection means (not shown in figure 1), providing the heating chamber with a gas stream comprising at least 86% inert gas and less than 14% oxygen through the first inlet (4). The composition of the gas/air flow through first inlet (4) into the heating chamber (6) is measured with a sensor (7).

In one embodiment of the present invention a dual purpose facility is provided wherein oxygen concentration in the first inert gas enriched gas stream provided by the gas source (1) to the heating chamber (6) is monitored and continuously controlled, wherein the first inert gas enriched gas stream is continuously provided to the heating chamber, and wherein the second flue gas stream is simultaneously and continuously led from the heating chamber to the afterburner, thus ensuring that the oxygen concentration within the heating chamber cannot exceed the oxygen concentration in the first inert gas enriched gas stream.

The process of thermal cleaning and separation of metal parts of a subject may be controlled by different variables, such as time and/or the combination of time and the temperature in the afterburner. As explained above, the temperature of the afterburner will rise during oxidation of the volatile organic products provided by the second flue gas stream.

When the chemical decomposition/pyrolysis of the organic material of the subject within the heating chamber is finished, the flue gas within the heating chamber will comprise less or no volatile organic products, resulting in the second flue gas stream led to the afterburner comprising less or no volatile organic products for oxidation within the afterburner, resulting in the temperature of the afterburner to drop, thereby marking the conclusion of the chemical decomposition/pyrolysis of the organic material of the subject within the heating chamber.

In one embodiment of the present invention, the afterburner comprises a temperature sensor, and a temperature drop measured by said temperature sensor is utilized as an indication for the conclusion of the chemical decomposition/pyrolysis of the organic material of the subject within the heating chamber.

In one embodiment of the present invention, the afterburner comprises one or more heating elements, said heating elements being any heating elements suitable for heating up gas/air, such as electric heating elements, infrared waves heating elements and/or induction heating elements, the afterburner further comprising a temperature sensor, wherein the temperature sensor is communicably connected to a controller and the one or more heating element, wherein said controller is adapted so as to utilize the temperature measurement provided by the temperature sensor to control the one or more heating elements such that a minimum temperature is maintained, and wherein the controller is programmed to maintain a minimum temperature in the afterburner for a specific amount of time.

The control system is thus able to recognise the conclusion of the chemical decomposition/pyrolysis of the organic material of the subject within the heating chamber by measuring the temperature of the afterburner, and can be set to only maintain a minimum temperature for a certain amount of time.

The gas source (1) is further fluidly connected to the afterburner (3) through connection means (not shown in figure 1), providing the afterburner (3) with a third oxygen enriched gas stream comprising at least 25% oxygen through third inlet (5) into the afterburner (3).

In one embodiment of the present invention the gas utilized is atmospheric air, the invert gas utilized is nitrogen and the gas source (1) comprises a membrane that separates nitrogen from said atmospheric air, providing a stream of nitrogen enriched atmospheric air with at least 86% nitrogen and less than 14% oxygen.

The organic material of the item (12) placed within the heating chamber (6) will undergo pyrolysis, i.e. the separation of the covalent bonds within the organic material by thermal decomposition within the inert environment provided by the facility (50), resulting in the decomposition of the organic compounds into volatile products or gas and char. The volatile products evaporate into the air/gas within the heating chamber and are then led out as flue gas from the heating chamber (6) through connection means (13) into the afterburner (3).

The afterburner (3) is thus provided with the flue gas stream comprising volatile organic compounds from the heating chamber (6) through connection (13) and oxygen enriched gas stream from the gas source (1) through third inlet 5, wherein the volatile organic compounds from the heating chamber are oxidized in the presence of high levels of oxygen to CO2 and H2O. The resulting final gas stream from the afterburner is then cooled down and led through the chimney (10) into the surrounding atmosphere.

In one embodiment of the present invention, a CO sensor in the chimney is utilized for the control and adjustment of the amount/volume of atmospheric air utilized and/or the concentration of oxygen in the third oxygen enriched gas stream provided from the gas source to the afterburner, wherein increased concentration of CO in the outlet air through the chimney is an indication of less successful oxidation within the afterburner, and wherein the controller/control system is programmed to adjust the concentration of oxygen in the third oxygen enriched gas stream provided from the gas source to the afterburner.

| No. | Item |
|---|---|
| 1 | Gas source |
| 2 | Circulation fan |
| 3 | Afterburner |
| 4 | First inlet for inert gas enriched gas mixture |
| 5 | Third inlet for oxygen enriched gas mixture |
| 6 | Heating chamber |
| 7 | Sensor |
| 8 | Heating element |
| 9 | Cooling fan |
| 10 | Chimney |
| 11 | Cooling actuators |
| 12 | Stator |
| 13 | Connection between heating chamber and afterburner |
| 14 | Pressure relief |
| 15 | Inlet for compressed air |
| 50 | Facility |

## Claims

1. Method for thermal cleaning and separation of metal parts, preferably separating windings from a stator of an electric motor and/or generator, where the stator windings are embedded in an organic and insulating material, wherein the stator or the stator and the stator housing is subjected to heat for chemical decomposition of the organic material, whereby the windings are loosened, comprising the steps of:
- providing a heating chamber (6);
- placing the stator with or without housing (12) in the heating chamber (6);
- connecting the heating chamber (6) to a gas source (1) capable of providing the heating chamber with a first inert gas enriched gas stream comprising inert gas and oxygen and supplying the heating chamber with the first inert gas enriched gas stream;
- applying heat to the heating chamber in a controlled manner thereby leading to chemical decomposition of the organic material and evaporation of volatile organic products into the gas within the heating chamber, thereby creating a flue gas comprising volatile organic products, any remaining oxygen and inert gas; and
- collecting the flue gas from the heating chamber (6) into a second flue gas stream comprising inert gas, volatile organic products and any remaining oxygen and leading the second flue gas stream from the heating chamber (6) to an afterburner (3);
wherein the first inert gas enriched gas stream comprises more than 86 vol% inert gas and less than 14 vol% oxygen and wherein the chemical decomposition is predominantly pyrolysis.

2. A method for thermal cleaning and separation of metal parts according to claim 1, wherein the inert gas utilized is nitrogen.

3. A method for thermal cleaning and separation of metal parts according to claim 1 or 2, wherein the gas source comprises a membrane for separating nitrogen from atmospheric air or pressurized atmospheric air, thereby producing a first nitrogen enriched gas stream and an third oxygen enriched gas stream, and wherein the first nitrogen enriched gas stream is led to the heating chamber and the third oxygen enriched gas stream is led to the afterburner.

4. A method for thermal cleaning and separation of metal parts according to claim 3, wherein the afterburner utilizes the third oxygen enriched gas stream for enhanced oxidation of the evaporated organic material from the heating chamber.

5. A method for thermal cleaning and separation of metal parts according to any preceding claim, wherein the first nitrogen enriched gas stream is supplied to the heating chamber as a continuous stream, the third oxygen enriched gas stream is supplied to the afterburner as a continuous stream and the second flue gas stream comprising inert gas, volatile organic products and any remaining oxygen from the heating chamber is supplied to the afterburner as a continuous stream.

6. A method for thermal cleaning and separation of metal parts according to any preceding claim, wherein the heat applied to the heating chamber is applied in a controlled manner according to a curve of controlled temperature and time.

7. A method for thermal cleaning and separation of metal parts according to any preceding claim, further comprising the step of measuring and controlling any one or more of the following:
- the flow rate of the first inert gas enriched gas stream from the gas source to the heating chamber, said first inert gas enriched gas stream comprising inert gas and oxygen;
- the composition of the first inert gas enriched gas stream from the gas source to the heating chamber, said first inert gas enriched gas stream comprising inert gas and oxygen;
- the flow rate of the second flue gas stream from the heating chamber to the afterburner, said second flue gas stream comprising inert gas, volatile organic products and any remaining oxygen;
- the composition of the second flue gas stream from the heating chamber to the afterburner, said second flue gas stream comprising inert gas, volatile organic products and any remaining oxygen from the heating chamber;
- the flow rate of the third oxygen enriched gas stream from the gas source to the afterburner, said third oxygen enriched gas stream comprising more than 25 vol% oxygen;
- the composition of the third oxygen enriched gas stream from the gas source to the afterburner, said third oxygen enriched gas stream comprising more than 25 vol% oxygen;
- the temperature applied in the heating chamber;
- the minimum temperature maintained in the afterburner; and/or
- the time utilized for the process.

8. A method for thermal cleaning and separation of metal parts according claim 6 or 7, wherein the applied curve is optimized for minimizing the amount of gas, energy and heat utilized.

9. A method for thermal cleaning and separation of metal parts according to any preceding claim, wherein the first inert gas enriched gas stream comprises between 8-10 vol% oxygen, particularly around 9% oxygen.

10. A facility (50) for thermal cleaning and separation of metal parts, preferably separating windings from a stator of an electric motor and/or generator, where the stator windings are embedded in an organic and insulating material, wherein the stator or the stator and the stator housing is subjected to heat for chemical decomposition of the organic material, whereby the windings are loosened, comprising:
- a gas source (1);
- a heating chamber (6) comprising a first inlet (4) in fluid connection with the gas source (1); and
- an afterburner (3) comprising a second inlet in fluid connection with the heating chamber (6) by connection means (13) and a third inlet (5) in a fluid connection with the gas source (1);
wherein the gas source provides a first inert gas enriched gas stream comprising less than 14% oxygen and more than 86 vol% inert gas that is led to the heating chamber and a third oxygen enriched gas stream comprising at least 25% vol% oxygen that is led to the afterburner.

11. A facility according to claim 10, wherein the gas source (1) comprises a membrane for separating nitrogen from atmospheric air.

12. A facility according to any of claims 10-11, further comprising at least one sensor for measuring one or more of the following:
- the oxygen level of the oxygen enriched gas stream entering the afterburner (3) through the afterburner inlet (5);
- the oxygen level of the inert gas enriched gas stream entering the heating chamber (6) through the heating chamber inlet (4);
- the rate of the gas flow through connection means (13);
- the composition of the gas flowing through connection means (13);
- the temperature of the gas within the heating chamber (6); and/or
- the temperature of the gas within the afterburner (3).

13. A facility according to any of claims 10-12, further comprising control means for controlling one or more of the following:
- the temperature of the heating chamber;
- the temperature of the afterburner;
- the composition of the first inert gas enriched gas stream, such as the concentration of oxygen and/or concentration of inert gas;
- the composition of the third oxygen enriched gas stream, such as the concentration of oxygen;
- the composition of the exhaust gas leaving the facility through the chimney, such as the concentration of CO and/or the total concentration of NO and NO2; and/or
- the time utilized.

14. A facility according to any of claims 10-13 for performing the method of claim 1.

15. A method according to any of claims 1-9 utilizing the facility of claim 10.
